# EUROPEAN PATENT SPECIFICATION

(11) **EP 4 068 620 B1**
(45) Date of publication and mention of the grant of the patent: **07.06.2023**
(21) Application number: 21166052.7
(22) Date of filing: 30.03.2021
(51) Int. Cl.: H02S 20/10

(54) **FRAMES FOR A VERTICAL SOLAR SYSTEM**
RAHMEN FÜR EIN VERTIKALES SOLARSYSTEM
CADRES POUR UN SYSTÈME SOLAIRE VERTICAL

(43) Date of publication of application: 05.10.2022
(60) Divisional application: 23163354.6
(73) Proprietor: Voestalpine Sadef NV, 8830 Hooglede (BE)
(72) Inventor: Depauw, Marc, 8610 Kortemark (BE); Lapon, Brecht, 8020 Oostkamp (BE); Decruyenaere, Koen, 8830 Hooglede (BE); Roose, Marc, 8400 Oostende (BE)
(74) Representative: IP HILLS NV

(56) References cited:
- JP-A- 2002 076 416
- US-A1- 2020 153 380

## Description

### Field of the Invention

The present invention generally relates to frames for a vertical solar system, such as a bifacial vertical solar system, and vertical solar system plants such as bifacial vertical solar system plants.

### Background of the Invention

Renewable energy nowadays becomes more and more important as energy source. Solar systems are one of the most important systems to create renewable electrical energy.

In fields, vertical solar systems being part of a vertical solar system plant become more and more used and installed. The PV panels are typically southwards oriented with their active side. This has as disadvantage that during the early morning hours and late afternoon and evening hours, less solar energy is captured and converted in electrical energy. The energy generation has a peak around noon, causing an overcapacity of renewable energy to be available at that moment, whereas in the early morning hours and late afternoon and evening hours, a shortage of renewable energy may be noticed.

A solution to this is the installation of vertical solar system plants. Vertically oriented PV panels are installed with an orientation of the active sides either to the east or west. For bifacial vertical solar system plants, some PV panels are installed with an orientation of the active sides to the east, other PV panels being oriented with their active side to the west. Optionally two PV panels are mount back-to-back, the one PV panel being oriented eastwards, the other westwards. Such bifacial vertical solar system plants generate two peaks of renewable energy, one in the morning hours, one in the late afternoon and evening hours, while over noon, less energy is generated. Hence such bifacial vertical solar system plants may temper the peaks in the energy generation and may flatten out the availability of renewable energy during the day.

Frames which can be used to provide such bifacial vertical solar systems, are described in EP3560098B1. These frames are appropriate to function on terrains which are substantially horizontal. The installation requires a significant number of bolting actions and typically requires a plurality of persons to cooperate while installing the frame.

There is a need for frames which can provide vertical solar systems, such as bifacial vertical solar systems, on uneven terrain, and which may be installed easily and with less time-consuming actions like bolting and alike. There is a need for frames which can be erected with less persons cooperating during installation. Further, more efficient use of the surface of the windows between the elements of the frame, i.e. a more efficient use of the window surface to provide PV panels may be required.

### Summary of the Invention

According to a first aspect, a frame for a vertical solar system is provided. The frame comprises:
- at least a first post and a second post, each of said posts
   ∘ having a first and a second, mutually opposed, side, wherein the second side of the first post faces the first side of the second post, and
   ∘ comprising a first and a second aperture from the first to the second side through the post, wherein in vertical direction the first aperture is situated lower than the second aperture;
- a first pair of beams, wherein:
   ∘ the first beam of the first pair of beams extends through the first aperture of the first post, thereby providing a first projection at the second side of the first post, and
   ∘ the second beam of the first pair of beams extends through the first aperture of the second post;
- a second pair of beams, wherein:
   ∘ the first beam of the second pair of beams extends through the second aperture of the first post, thereby providing a second projection at the second side of the first post, and
   ∘ the second beam of the second pair of beams extends through the second aperture of the second post;
   wherein at the second side of the first post:
   ∘ the second beam of the first pair of beams is supported by the first projection, and
   ∘ the second beam of the second pair of beams is supported by the second projection.

The second beam of each pair of beams is supported by the projection of the first beam through an aperture in the post. The second beam hence is contacting the projection and may be horizontally supported by the projection. The projection and the end of the second beam may be coupled to each other such that horizontal moving of the second beam vis-à-vis the projection, e.g. due to wind forces, is prevented. Alternatively the profiles of the beams and the projection hinder such horizontal movement of the second beam vis-à-vis the projection.

The frame according to the invention is suitable as a frame for a vertical solar system. The frame according to the invention is suitable as a frame for a bifacial vertical solar system. Bifacial vertical solar systems have PV panels comprising PV cells on their active surfaces. The active surfaces are preferably oriented east-west, such that one side of the bifacial vertical solar system gets a maximum direct sunlight incidence in the morning, the other side in the afternoon, whereas the bifacial vertical solar system has a dip in energy creation efficiency round noon. The bifacial vertical solar system may comprise PV panels one above the other, the one, lower panel having its active surface oriented to one side, the adjacent, upper PV panel having its active surface oriented the opposite direction.

Between the two posts and the four beams, a quadrilateral window is formed, in which a PV panel may be mounted, the photovoltaic panel comprising two sides with PV cells providing two active surfaces. As such a bifacial vertical solar system may be provided. Alternatively, a PV panel with an active surface only at one side may be used as well. Even more, two PV panels with an active surface only at one side may be mounted in the quadrilateral window, back-to-back. This quadrilateral window is obtained by simply coupling of the second beam of each of the pairs of beams, to the corresponding projection. Such coupling may be done by bolting, screwing or any other known way. The frame has the advantage that the beam resting on the projection may be oriented inclined, i.e. the axis of the beam resting on the projection can be under an angle with the axis of the beam providing the projection. As such frames for vertically oriented photovoltaic panels with vertically oriented photovoltaic cells may accommodate the installation of a vertical solar system, optionally a bifacial vertical solar system, on uneven or sloping terrain. Beams being mounted on the same height in adjacent frames are streamlined and aligned, which facilitates easy supporting of power cables, water tubes (for irrigation and/or sprinkling of the vegetation grown under the system) and alike.

The handling the skilled person is to perform to raise such frame according to the invention, is not complicated and can be performed by one skilled person. After having provided two adjacent posts, the skilled person merely needs to provide the projections at one side of a first post. This may be already achieved by the earlier inserting of a beam in the aperture of a post, which post is part of an adjacent window of the frame. This connection of beam and post can be provided bolt-free, which simplifies and accelerates the installation of the frame. Next, a second beam is inserted in the corresponding aperture in the next post. The insertion typically will be done by having the beam slightly raised at the side opposite to the inserted end of the beam in the aperture. After insertion, the skilled person lowers the beam until it rests on the projection with the end of the beam opposite to the end inserted in the aperture. As such a beam in substantially horizontal position at a first height is provided. This handling is repeated to provide a beam in horizontal position on a second height, thereby providing a quadrilateral window in a frame, allowing PV panel or panels to be installed. Optionally, in each window, two or more PV panels, optionally with PV cells at both surfaces, may be mounted side-by-side along the beams.

When two or more such frames are provided one adjacent to the other the second post of the one frame can function as the first post of the adjacent frame. As such rows of frames can be provided, which together may form rows of frames in a bifacial vertical solar system plant. The beams of adjacent frames may be provided all on the same height along the posts, causing less space to be lost in the installation of PV panels in these rows of frames. The total height of the vertical solar system, e.g. the bifacial vertical solar system, may be limited, providing a lower bending moment for the posts. As such, lighter posts may be used to provide the bifacial vertical solar system.

According to some embodiments, the frame further may comprise a third pair of beams,
∘ the first post and the second post each comprising a third aperture from the first to the second side through the post, wherein in vertical direction the second aperture is situated lower than the third aperture;
wherein further:
∘ the first beam of the third pair of beams extends through the third aperture of the first post, and provides a third projection at the second side of the first post, and
∘ the second beam of the third pair of beams extends through the third aperture of the second post;
and wherein at the second side of the first post, the second beam of the third pair of beams is supported by the third projection.

Between the two posts and the six beams, two quadrilateral windows are formed one above the other. Possibly, in each window, at least one vertically oriented photovoltaic panel may be mounted, the photovoltaic panel possibly may have two surfaces being provided with PV cells. Alternatively, one photovoltaic panel, with one active surface comprising PV cells, may be mounted in one of the quadrilateral windows, with its active surface facing a first side, one photovoltaic panel with one active surface comprising PV cells, may be mounted in the other of the quadrilateral windows, with its active surface facing the opposite side.

According to some embodiments, the frame further may comprise a fourth pair of beams
∘ the first post and the second post each comprising a fourth aperture from the first to the second side through the post, wherein in vertical direction the fourth aperture is situated between the second aperture and third aperture;
wherein further:
∘ the first beam of the fourth pair of beams extends through the fourth aperture of the first post, and provides a fourth projection at the second side of the first post, and
∘ the second beam of the fourth pair of beams extends through the fourth aperture of the second post;
and wherein at the second side of the first post, the second beam of the fourth pair of beams is supported by the fourth projection.

According to some embodiments, the distance (D) between the upper sides of the second pair of beams and the lower sides of the fourth pair of beams may be in the range of 0 to 40 cm, preferably between 0 to 35 cm, such as between 0 to 25 cm.

Between the two posts and the eight beams, two quadrilateral windows are formed one above the other. In each window, at least one vertically oriented photovoltaic panel may be mounted. This PV panel may have one or both surfaces being provided with PV cells. The second and fourth beams work together in order to resist wind load exercised of the frame when PV panels are installed. This frame is advantageously used to provide the outer rows of frames in a bifacial vertical solar system plant which comprises several parallel rows of frames according to the invention. The outer rows of frames are exposed to more severe wind load as the rows between the two outer rows of frames. Frames with these double beam in between two PV panels doubles the wind load resistance in the middle of the frame. The provision of an opening between the upper sides of the second pair of beams and the lower sides of the fourth pair of beams has the advantage that part of heavy wind loads may escape through the opening.

According to some embodiments, the apertures may have a perimeter larger than the perimeter of the beams inserted. This allows an easy insertion of the beams in the apertures.

According to some embodiments, the posts may be substantially vertical to the ground.

According to some embodiments, the axes of beams of a pair of beams are mutually inclined, i.e. are under one relative one of the axes to the other of the axes. According to some embodiments, for each pair of beams, the axis of the second beam may be under an angle in the range of -15° to 15° relative to the axis of the first beam.

The angle is measured relative to the axis of the first beam. A positive angle means that the axis of the second beam is inclined upwards versus the axis of the first beam, a negative angle means that the axis of the second beam is inclined downwards versus the axis of the first beam.

Hence the beams may be inclined relative to the ground or may follow the ground or terrain profile due to the mutual inclination. As such, the height between the ground surface and the lower side of the lower beams may be to a large extent guaranteed and be kept about constant. As such, the total height of the vertical solar system, such as the bifacial vertical solar system, can be limited over its total length of the rows of frames. The height necessary to grow crops under the vertical solar system is however guaranteed to a larger extent.

The angle is measured from horizontal to the beam, at the side of the beam where the beam is above the horizontal. The direction of the axis of the beam hence may vary over a range of 30°, from 15° downwards to 15° upwards versus the horizontal.

This possible mutual inclination of the beams has the advantage that the frame can be installed on a terrain which is not horizontal, but is uneven, and/or under an inclination or slope, while the posts still can be installed vertically. The frame according to the invention even allows installation on a terrain whose inclination or slot is not constant but varying along the length of rows of frames according to the invention, one frame adjacent to the other and the second post of a fist frame being the first post of the adjacent frame. An uneven, irregular terrain with a varying inclination or slope of up to 15° can be dealt with. Also an even but inclined terrain with an inclination or slope of up to 15° can be dealt with.

According to some embodiments, all beams may be identical. The beams may be identical in dimension and in shape, e.g. cross section.

According to some embodiments, in at least one quadrilateral window defined by the posts and two pairs of said beams, at least one PV panel may be provided, the surfaces of the PV panel being substantially parallel to the plane defined by the posts and the two pairs of beams, the PV panel having one or two surface being provided with PV cells. In case PV panels with PV cells at both surfaces are provided, a bifacial vertical solar system is provided.

According to some embodiments, in at least one quadrilateral defined by the posts and two pairs of the beams, at least one PV panels may be provided, the surfaces of the PV panel being substantially parallel to the plane defined by the posts and the two pairs of beams. At least one PV panels is mounted in the quadrilateral, the active surface or surfaces, provided by the PV cells, of the at least one PV panels facing outwards.

As the posts preferably are substantially vertical, the PV panels are mounted substantially vertically vis-à-vis the ground surface.

According to some embodiments, the posts may be rolled metal profiles. Alternatively, the posts may be extruded or pultruded posts, like metal extruded or pultruded posts, e.g. aluminium extruded or pultruded posts. The posts may have a profile from the group consisting of U profiles, C profiles, C+ profiles, Sigma profiles, Sigma+ profiles, Omega profiles and Omega+ profiles, Z profiles, S profiles, T profiles, I profiles and tubes.

According to some embodiments, the posts may comprise at least a first and a second part, the first part being partially inserted in the ground, the second part being mechanically fixed to the portion of the first part extending above the ground.

The first and second part may be identical or different in cross section and/or dimension. Preferably the first part fits in or over the second part. Both parts may have a profile from the group consisting of U profiles, C profiles, C+ profiles, Sigma profiles, Sigma+ profiles, Omega profiles and Omega+ profiles, Z profiles, S profiles, T profiles, I profiles and tubes. More preferred, the profile of the second, upper part fits over the profile of the first, lower part. Alternatively, the two parts may be mounted one to the other back-to-back or web-to-web. The two parts may be slidingly engaged and mechanically coupled one to the other. This mechanically coupling may be done using bolts and nuts or screws or alike.

According to some embodiments, the beams may be rolled metal profiles. Alternatively, the beams may be extruded or pultruded beams, like metal extruded or pultruded beams, e.g. aluminium extruded or pultruded beams. The cross section of the profiles of the beams may be selected from the same group of profiles from which the posts may be selected. However more preferably, the beams are more complex rolled metal profiles, most preferred rolled tubular profiles having a complex cross section. The two outer ends of the plate from which the profile is rolled, may be coupled, e.g. welded or glued or mechanically connected like clinched, to each other to close the profile, or may be unconnected but parallel to each other

The cross section of the beam may have at least a first, upper surface, which is substantially horizontal once installed. This first surface may be used to carry and contact the edge of one or more PV panels, mounted in a quadrilateral window formed by a.o. this beam. The cross section preferably comprises a second, lower surface, substantially parallel but opposite to the first surface vis-à-vis the beam axis. Also, this second surface may be used to contact the edge of one or more PV panels, mounted in a further quadrilateral window formed by a.o. this beam. However more preferred, there is a space between the second surface and the edge of the PV panel inserted. This space may be up to 20 or even up to 25 mm wide. This space may allow rectangular PV panels to be mounted in quadrilateral windows which have a parallelogram shape, due to the inclination of the beams being supported on the adjacent and corresponding projection.

Adjacent the first surface, at a first side of the first surface, the cross section may comprise a vertical surface, preferably a relatively short vertical surface, which is intended to contact the front- or backside of the one or more PV panels, mounted in a quadrilateral window formed by a.o. this beam. Adjacent the second surface, if any, at the same side of the second surface in view of the beam axis, the cross section may comprise a further vertical surface, preferably a relatively short vertical surface, which is intended to contact the front- or backside of the one or more PV panels, mounted in a further quadrilateral window formed by a.o. this beam. The outer ridges of the upright surfaces may be connected one to the other by a surface substantially vertical or slightly downwards inclined, inclined towards the axis seen from the first surface of the beam.

The PV panels being mounted in the quadrilateral windows of the frame, may vary in thickness. The upper surface of the beams may support one or more PV panels, optionally PV panels with at both surfaces PV cells, due to the width of this upper surface. To hold the panel or panels in the window, clamps may be mounted, e.g. bolted to the beams along the side surfaces of the beams. The clamps may have a lip which is to contact the lower edge of the front- or backside of the PV panels which is mounted in the quadrilateral window. The opposite side of the lower edge of the front- or backside of the PV panels is contacting the vertical surface at the first side of the first surface. As such the edge of the PV panel or panels is clamped between the vertical surface at the first side of the first surface and the lip of the clamp. One, two or more such clamps may be installed along the length of one PV panel.

The upper edge of the PV panel is to contact, at the front- or backside of the PV panel, the further vertical surface adjacent the second horizontal surface of the beam. The clips may be provided with a second lip, which contacts the opposite side of the front- or backside of the PV panel and as such holds the upper edge of the PV panel in place. This upper edge of the PV panel may possibly not contact the second horizontal surface of the beam.

Hence the height of the clamps, i.e. the distance between the outer points of the two lips of the clamp, is preferably larger than the distance between the first and second horizontal surface of the beam. The width of the clamp, this is the distance between the edges of the clamp perpendicular to the lips of the clamps, is preferably less than the distance between the first and second horizontal surface of the beam. The clamp can be bolted to the outer surface of the beam and be 90° rotated to its intended position, i.e. with its lips being upwards and downwards oriented. The clamps do not hinder the insertion of the PV panel in the window. After this insertion, the clamps are turned 90° to their intended position and fixed to the beam. In this position the PV panel is clamped and hence hold in position in the window.

Adjacent the first surface, at the second side of the first surface, the cross section may comprise a downwards inclined surface, downwards inclined to a direction oriented away from the beam axis. As such sand, vegetation and dirt may not build up along the faces of the PV panels installed in the quadrilateral window of which the beam is the lower beam. Occasional rain will wash away any material residing on the first horizontal surface and the interference with this inclined surface.

Adjacent the second surface, at the second side of the second surface, the cross section may comprise an upwards inclined surface, upwards inclined to a direction oriented away from the beam axis. As such incident solar light may throw a less large shadow on the active surface of the PV panels mounted in the quadrilateral window of which the beam is the upper beam.

Between these two inclined surfaces, possibly a further horizontal surface section may be provided. Between these two inclined surfaces, possibly also a further vertical surface section may be provided.

Horizontal and vertical, except when explained differently, always is to be understood in reference to the beam position when the beam is mounted between two vertical posts in the way it is intended to be mounted.

According to some embodiments, the beams may have beam axes, the beams being provided with a radial recess for receiving the edge of the aperture in the recess. This recess or slit is preferably perpendicular to the beam axis. This recess is provided preferably near the first outer end of the beam. Such recess may be a simple incision or slit in the beam from the lower side of the beam in installed position, upwards. The two sides of the recess slide over the edge of the aperture in the post and as such prevent sliding of the installed beam in a direction along the direction of the beam axis. Preferably the part of the circumference of the aperture, adjacent the circumference section where the beam is hung to the aperture, fits to the first surface of the beam adjacent the recess. As such the beam will not shift in horizontal direction perpendicular to the beam axis.

As the beams may be sunken to some extent in the aperture, due to this slit or recess, the beams leave a section of the aperture open in installed position. This section may be closed by a plug fitting in the open aperture section. Alternatively a plate is mounted on the posts, closing the open aperture section. Closing this open aperture section may in particularly be done for the vertically highest aperture. Alternatively a means to contact the upper side of the beam may be mounted to the web and/or the flanges and/or the lips of the posts. Optionally this holding-means also can prevent torsion of the post.

If the beams cross section has a further horizontal surface section provided between its two inclined surfaces, the recess may be provided up to, but not including this further horizontal surface section. When the beam is hung in the aperture, with the edge of the aperture sliding in the recess, the beam will rest on the edge of the aperture by means of this horizontal surface. It is understood that preferably the edge of this aperture has a corresponding horizontal section.

In the alternative, if inclined surfaces are provided between the two horizontal surfaces of the cross section of the beam, the inclined surfaces may rest against corresponding inclined sides of the edge of the aperture.

The position of this recess along the axis of the beam defines the length which will extend beyond the aperture of the post when the beam is hung in the aperture. Hence it defines the length of the projection, being the distance between the recess and the closest very outer end of the beam. The provision of this projection, and supporting the adjacent beam on this projection, has the advantage that the free span of the beam is reduced. As such smaller forces and moments will be present, causing the deflection to be smaller. As such lighter beams may be used. Preferably this length is less than 500mm or less than 400mm, such as less than 300mm. Preferably the length of the projection corresponds to the moment zero point of a continuous beam, in order to have a maximum strength and stiffness for a minimum beam profile weight

According to some embodiments beam may have a beam cross section profile at a first of its outer ends, and the beam has an end cross section profile at the other outer end which matches with part of the beam cross section profile. Possibly the beam cross section profile, as installed in the frame, may comprise an upper horizontal section, and the end cross section profile comprises at least part of said upper horizontal section. Optionally, the beam cross section profile, as installed in the frame, may comprise a side vertical section, and the end cross section profile comprises at least part of said side vertical section.

The beam has at this side a so-called cut-off, where part of the beams profile is cut away. The remaining part of the profile, i.e. end cross section profile, fits to the outer side of an identical beam profile. So it can rest on an identical beam.

As such, if a beam is hung in an aperture of a post, the extending part of the beam, being the projection, may have the original profile of the beam. A next, adjacent beam with such cut-off, may rest on the profile of the projection.

The part of the beam between a recess and the outer end, and the part of the beam with reduced profile at the other end of the beam, may comprise slits of openings, to allow the mechanical coupling of two such ends by means of bolts and nuts. The slits of openings may be provided by punching, perforation or die cutting or alike. Optionally, the part of the beam between a recess and the outer end is provided with a bolt opening and a nut already coupled to the inner side of the beam in front of this bolt opening.

According to a second aspect of the invention, a vertical solar system plant is provided, which vertical solar system plant comprises a plurality of frames according to the first aspect of the invention. If PV panels comprising at both surfaces PV cells are used, a bifacial vertical solar system plant may be provided.

The plant can be built on irregular, sloping terrain. The height of the first beams of the frames can be such that under the frames, crops like grass, wheat, cereals and alike still can grow and be harvested with regular agricultural equipment.

The frames may be aligned one next to the other, forming rows of frames. The second post of the first frame in a row of frames can function as the first post in the adjacent frame.

According to some embodiments, the plant may comprise a plurality of rows, each row comprising at least two frames.

On a terrain, several rows of frames can be installed, all rows preferably aligned and substantially parallel. The most outer rows will catch more wind load as compared to the rows between the two most outer rows of frames. Hence the frames of the outer rows are to be dimensioned stronger in order to resist higher wind loads as compared to the frames of the rows between the two outer rows.

According to some embodiments, the plant may comprise at least 2 rows, preferably more than 2 rows, the outer rows comprising frames wherein said frame further comprises a third pair of beams, the first post and the second post each comprising a third aperture from the first to the second side through the post, wherein in vertical direction the second aperture is situated lower than the third aperture;
wherein further:
   ∘ the first beam of the third pair of beams extends through the third aperture of the first post, and provides a third projection at the second side of the first post, and
   ∘ the second beam of the third pair of beams extends through the third aperture of the second post;
and wherein at the second side of the first post, the second beam of the third pair of beams is contacting and is vertically supported by the third projection the frame further comprises a fourth pair of beams,
   ∘ the first post and the second post each comprising a fourth aperture from the first to the second side through the post, wherein in vertical direction the fourth aperture is situated between the second aperture and third aperture;
wherein further:
   ∘ the first beam of the fourth pair of beams extends through the fourth aperture of the first post, and provides a fourth projection at the second side of the first post, and
   ∘ the second beam of the fourth pair of beams extends through the fourth aperture of the second post;
and wherein at the second side of the first post, the second beam of the fourth pair of beams is contacting and is vertically supported by the fourth projection.

The provision of double beams between two (or more) adjacent PV panels one above the other, has the effect that the higher wind load caught by the PV panels can be withstand by the double beams. These double beams are not necessary in the intermediate rows between the first and last, or in other words, outer rows. So the dimension of a single beam is sufficient to withstand the lower wind load at the inner part of the plant.

The provision of two, preferably identical intermediate beams in the outer rows has the advantage that only one type of beam needs to be provided to the wharf when building the plant. This simplifies the logistic of the plant and may facilitate avoiding of mistakes during construction, e.g. installing wrong types of beams in the outer rows of the plant.

According to some embodiments, the vertical solar system plant may be a bifacial vertical solar system plant.

### Brief Description of the Drawings

Fig. 1 schematically shows a frame for a beneficial vertical solar system according to the invention.
Fig. 2 schematically shows an alternative frame for a beneficial vertical solar system according to the invention.
Fig. 3 schematically shows a row of frames according to the invention.
Fig. 4 schematically shows an alternative row of frames according to the invention.
Fig. 5 is a schematically view of a radial cross section of a beam used to provide frames according to the invention.
Fig. 6a to 6d are schematically views of alternative radial cross sections of beams used to provide frames according to the invention.
Fig. 7a to 7c are schematically views of details of beams used to provide frames according to the invention.
Fig. 8 is a schematically view of a radial cross section of a beam used to provide frames according to the invention.
Fig. 9a to 9c are schematically views of details of beams used to provide frames according to the invention.
Fig. 10 is a schematically view of two beams, one supported by the other, as part of a frame according to the invention.
Fig. 11a to 11c, 12a to 12c, 13 and 14 are schematically views of a coupling point of two beams and a post, being part of a frame according to the invention.
Fig. 15a to 15c and 16 are schematically views of a clamp holding PV panels in a frame, the frame being a frame according to the invention.
Fig. 17 is a detail of a post being part of a frame according to the invention.
Fig 18A to 18G show cross sections of a post being part of a frame according to the invention.
Fig. 19 shows a schematically view of a tubular post being part of a frame according to the invention.
Fig. 20a to 20c show schematically an insert used in a frame according to the invention.
Fig. 21a and 21b show schematically a holding means used in a frame according to the invention. In the figures, the same reference number refers to the same or to a similar feature.

### Detailed Description of Embodiment(s)

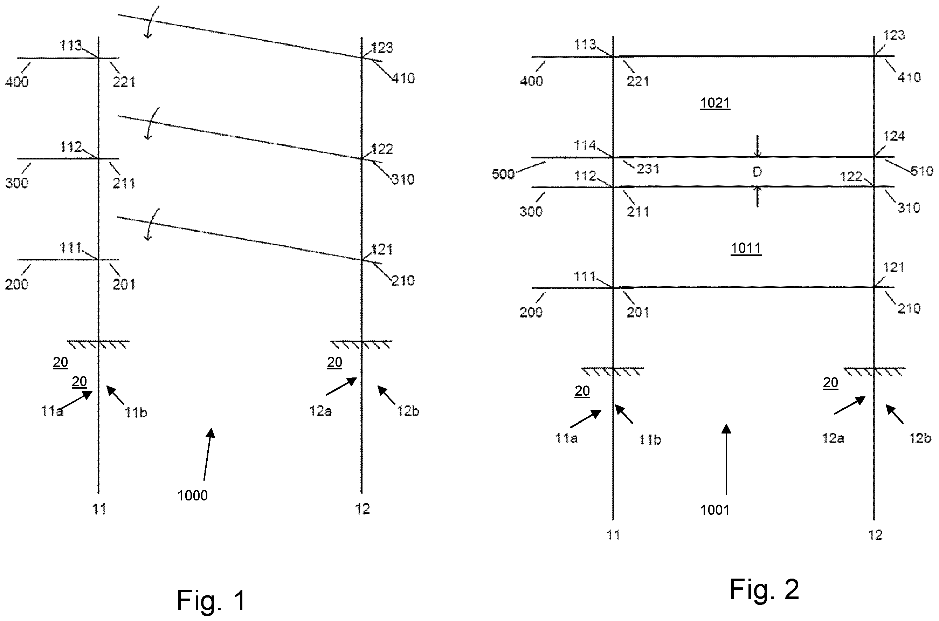

Figure 1 shows schematically a frame 1000 for a bifacial vertical solar system. The frame 1000 comprises a first post 11 and a second post 12. The posts 11 and 12 are substantially vertical to the ground. The posts 11 and 12 have a first and a second, mutually opposed, side 11a, 11b, 12a, 12b, the second side 11b of the first post 11 facing the first side 12a of the second post 12. The posts are inserted in the ground 20 over a length sufficient to keep the frame 1000 erected and stable under wind load.

Each post 11 and 12 comprises a first and a second aperture 111, 112, 121, 122 from the first to the second side through the post. In vertical direction, the first aperture 111 respectively 121 is situated lower than the second aperture 112 respectively 122. Each post 11 and 12 comprises further a third aperture 113 and 123 from the first to the second side through the post. The third aperture 113 respectively 123 is situated above the second aperture 112 respectively 122 in vertical direction.

The frame further comprises a first pair of beams 200 and 210. The first beam 200 of the first pair of beams extends through the first aperture 111 of the first post 11, thereby providing a first projection 201 at the second side 11b of the first post 11. The second beam 210 of the first pair of beams extends through the first aperture 121 of the second post 12. As schematically shown in figure 1, the second beam 210 is slightly lifted when being inserted in the first aperture 121 of the second post 12 and is thereafter brought down towards the projection 201. In installed position, the second beam 210 of the first pair of beams is contacting and is vertically supported by the first projection 201.

The frame 1000 further comprises a second pair of beams 300 and 310. The first beam 300 of the second pair of beams extends through the second aperture 112 of the first post 11, thereby providing a second projection 211 at the second side 11b of the first post 11. The second beam 310 of the second pair of beams extends through the second aperture 122 of the second post 12. Again, the second beam 310 is slightly lifted when being inserted in the second aperture 122 of the second post 12 and is thereafter brought down towards the projection 211. As such, the second beam 310 of the second pair of beams is contacting and is vertically supported by the second projection 211.

The very same applies for a third pair of beams 400 and 410, being part of the frame 1000. The first beam 400 of the third pair of beams extends through the third aperture 113 of the first post 11 and provides a third projection 221 at the second side 11b of the first post 11. Again, the second beam 410 is slightly lifted when being inserted in the third aperture 123 of the second post 12 and is thereafter brought down towards the projection 221. At the second side 11b of the first post 11, the second beam 410 of the third pair of beams is contacting and is vertically supported by the third projection 221.

As such, a frame 1000 is provided having two quadrilateral, in this embodiment rectangular, windows in which PV panels can be installed, at least one in each window, optionally PV panels with PV cells at both surfaces.

An alternative frame 1001 is shown schematically in figure 2. In this frame 1001, a fourth pair of beams 500 and 510 is provided. The first beam 500 of the fourth pair of beams extends through a fourth aperture 114 in the first post 11 and provides a fourth projection 231 at the second side 11b of the first post 11. This fourth aperture is positioned between the second and third aperture, and closer to the second aperture as compared to the third aperture. Again, the second beam 510 is slightly lifted when being inserted in a fourth aperture 124 in the second post 12. Also, here the fourth aperture is positioned between the second and third aperture, and closer to the second aperture as compared to the third aperture. The second beam 510 is thereafter brought down towards the projection 231. At the second side 11b of the first post 11, the second beam 510 of the fourth pair of beams is contacting and is vertically supported by the third projection 231. The beams 310 and 510, and 300 and 500 are spaced one to the other over a distance D, which is far less as compared to the distance between beams 400 and 500, and 300 and 200. D is preferably less than 25 cm. In this frame 1001, two windows are created in which PV panels may be installed, while the combination of beams 310 and 510, and 300 and 500, are working together to ensure heavy wind load can be resisted.

Again, a frame 1001 is provided having two quadrilateral, in this embodiment rectangular, windows 1011 and 1021 in which PV panels can be installed, at least one in each window, optionally being PV panels which have PV cells at both surfaces.

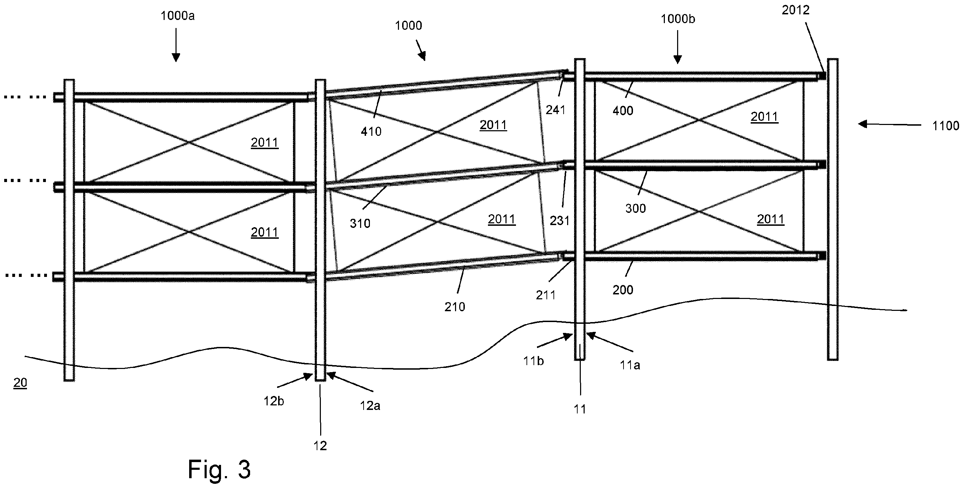

Several frames 1000 as shown in figure 1 may be aligned in a row, while for each frame, the second post 12 of a first frame 1000 functions as the first frame in the adjacent frame1000a. The second beam 210, 310 and 410 of each pair of beams in a first frame 1000 functions as the first beam in the adjacent frame 1000a, providing the corresponding projections of the first posts in this adjacent frame. A row of frames 1100 may be provided as shown in figure 3. In each window of the frames, PV panels 2011such as PV panels with PV cells at both surfaces, are mounted. The profile of the ground 20, which is not flat but uneven and inclined, is followed by the orientation of the beams. At the projections, the first and second beams are under an inclination one to the other, i.e. the axis of the second beam is inclined in view of the axis of the first beam. As such, identical posts with apertures at identical height or position along the axis of the posts may be used to provide the row of frames 1100.

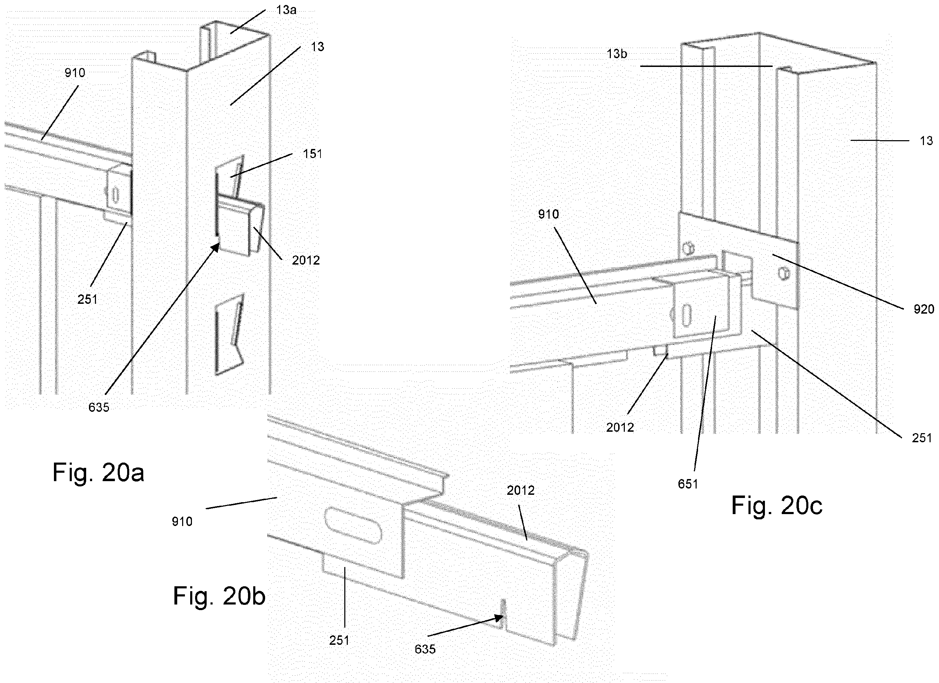

On the first frame 1000b of the row 1100, the projections are not provided by a beam extending through an aperture in the first post. As shown in figures 20a to 20c, an insert 2012 is inserted in an aperture 151 and provides a projection 251 at the inner side 13b of a first post 13 of a frame 1000b. The insert 2012 has a recess 635 to slide over the edge of aperture 151. The insert 2012 extends over a small part at the first side 13a of the post 13. The insert 2012 is used to provide support to the second beam 910 of this frame 1000b, and this for each aperture in a post being the first post in a row 1100.

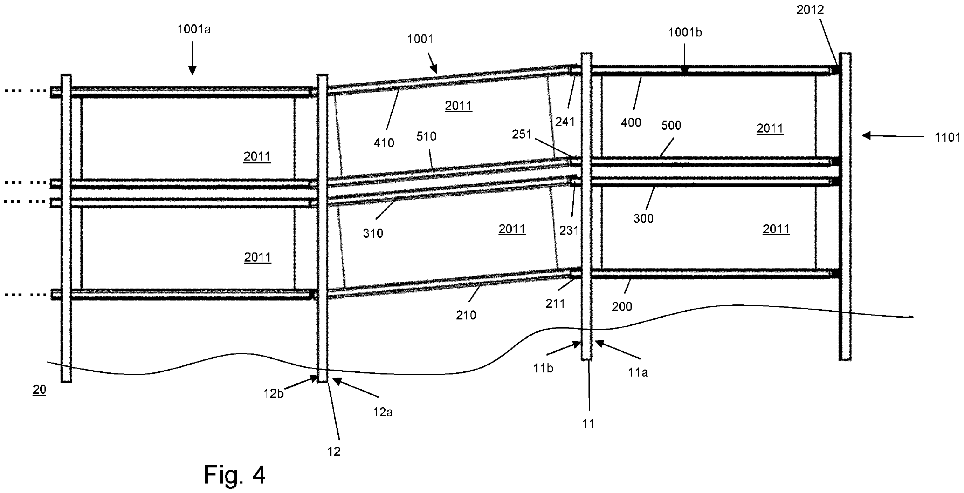

A similar row 1101 of frames 1001, 1001a and 1001b is shown in figure 4. The frames used are of the type of frame 1001 as shown in figure 2. This row 1101 has a higher wind load resistance due to the combination of beams 300 and 500, and 310 and 510 in the middle of the frame. This row 1101 is adapted to function as the outer row of a vertical solar system plant comprising a plurality of parallel rows of bifacial vertical solar systems.

For the rows 1100 and 1101 of figures 3 and 4, the row may be oriented with the sides of the PV panels 2011 oriented towards the east and west, the first frame 1000b and 1001b being positioned closest to the south and the last frame of the row being positioned closest to the north. The coupling of the beams is preferably oriented to the south, such that shadow of the post is thrown on the coupling of adjacent beams, and less on the PV cells of the PV panels.

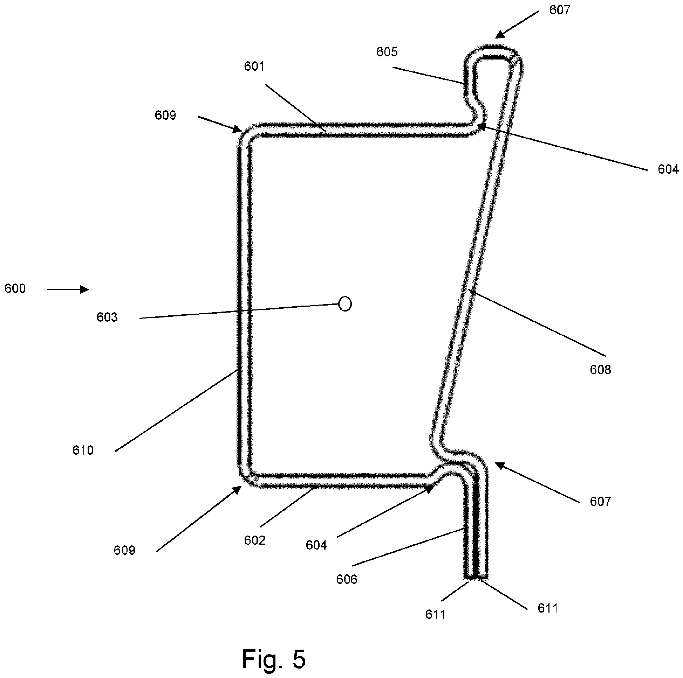

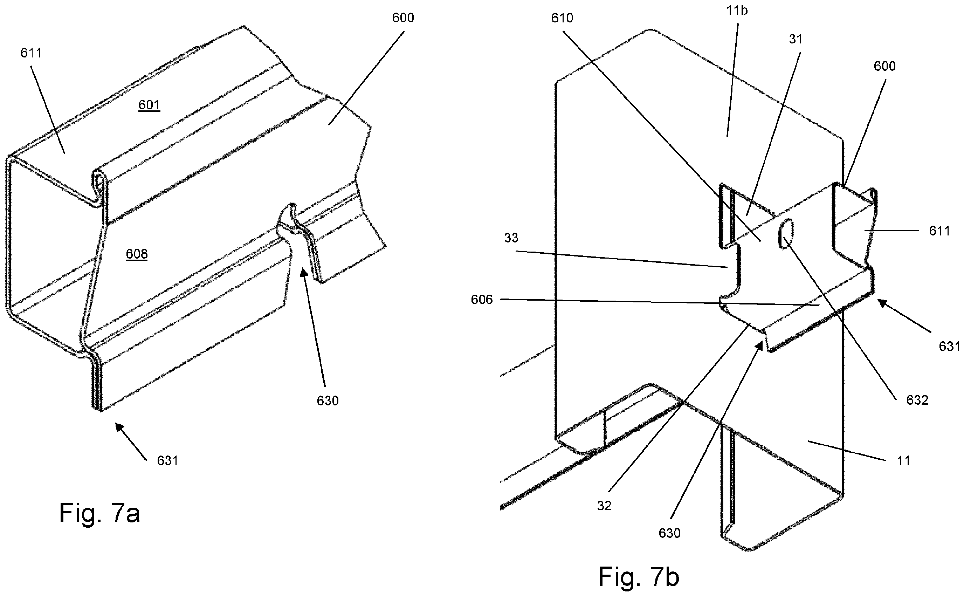

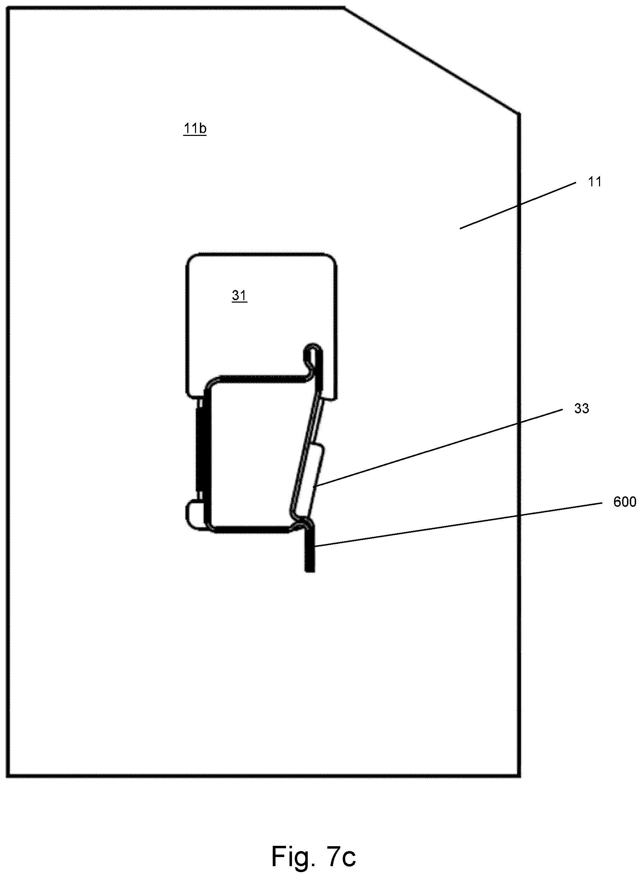

The beams used in the frames as show in in figures 1, 2, 3 and 4, may all be rolled steel beams having a cross section as shown in figure 5. These beams are referred to as beam 600 in figure 5. Possibly, as shown in figures 7b, 11a to11c, 12a to 12c, 13 and 14, as post, a C+ profile may be used. However alternative profiles like U profiles, C profiles, Sigma profiles, Sigma+ profiles, Omega profiles and Omega+ profiles, Z profiles, S profiles, T profiles, I profiles and tubes may be used. The length of the posts above the ground may be up to 4m, such as up to 5m, even up to 6m or more, e.g. up to 8m or more.

The cross section of the beam 600 has at least a first, upper surface 601, which is substantially horizontal once installed. This first surface 601 may be used to carry and contact the edge of one or more PV panels, mounted in a quadrilateral window formed by a.o. this beam 600, where this beam is at the lower side of the quadrilateral window.

The cross section comprises a second, lower surface 602, substantially parallel but opposite to the first surface 601 vis-à-vis the beam axis 603. This second surface may contact the edge of one or more PV panels, mounted in a quadrilateral window formed by a.o. this beam 600, this beam being the upper side of the quadrilateral window.

Adjacent the first surface 601, at a first side 604 of the first surface 601, the cross section comprises a vertical surface 605. When the beam 600 is used as lower beam of a quadrilateral window, this surface 605 is intended to contact the front- or backside of the one or more PV panels, mounted in this quadrilateral window. Similarly, adjacent the second surface 602, at the same side 604 of the second surface 602 in view of the beam axis 603, the cross section comprises a further vertical surface 606. This vertical surface 606 is intended to contact the front- or backside of the one or more PV panels, mounted in a further quadrilateral window formed in which window this beam is an upper beam. The outer ridges 607 of the substantially upright surfaces 605 and 606 are connected one to the other by a surface 608 substantially vertical or slightly downwards inclined, inclined towards the axis 603 seen from the first surface 601 of the beam 600. The second side 609 of the first surface 601 and the second side 609 of the second surface 602 are connected by a substantially vertical surface 610.

The beam 600 is a rolled steel beam and provides a closed tubular cross section. At the two ends of the steel sheet from which the beam 600 is provided, the two outer edged 611 are chemically or mechanically coupled, e.g. welded or clinched.

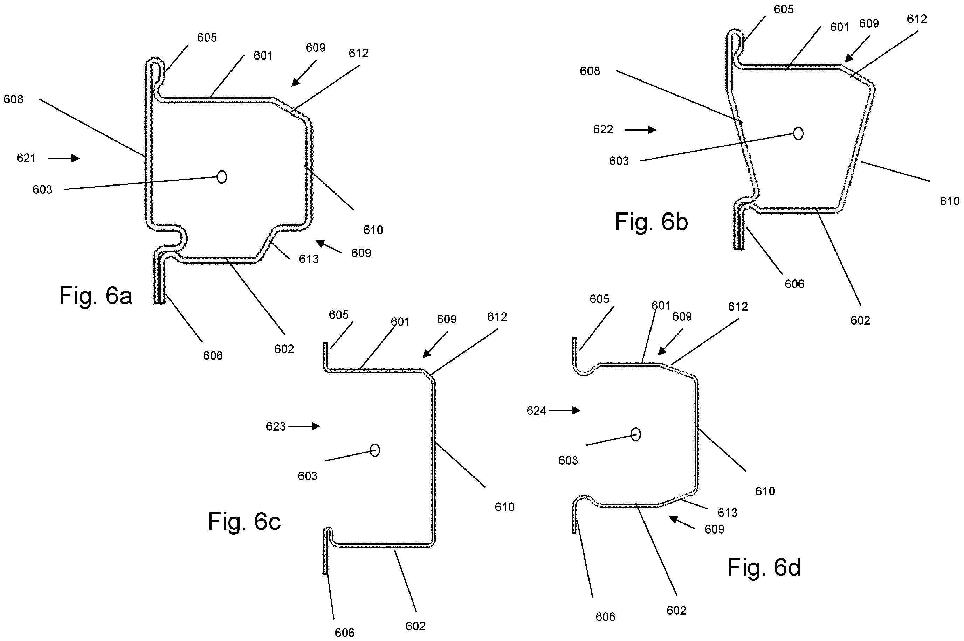

Alternative cross sections of beams 600 are shown in figures 6a to 6d, where cross sections 621 and 622 have substantially the same surfaces as the beam 600 of figure 5. Sections 623 and 624 are U shaped open channel beams which may be used as well. Also these cross sections have a first and a second substantially horizontal surface, and at one side, two relatively small vertical surfaces. Closed profiles are preferred, ad no dirt and sand can accumulate in or on surfaces of the profile, being substrate for herbs and weeds to grow.

As is best visible in figures 6a to 6d, adjacent the first surface 601, at the second side 609 of the first surface 601, the cross section may have a rounded corner or may even comprise a downwards inclined surface 612, downwards inclined to a direction oriented away from the beam axis 603. Sand and dirt may not build up along the faces of the PV panels installed in the quadrilateral window of which the beam is the lower beam. Occasional rain will wash away any material residing on the first horizontal surface 601 and the interference with this inclined surface or rounded corner. The growth of herbs and weeds in front of the PV panel active side can be avoided to a large extent.

In reference to figure 6a and 6d, adjacent the second surface 602, at the second side 609 of the second surface 602, the cross section may comprise an upwards inclined surface 613, upwards inclined to a direction oriented away from the beam axis 603. Incident solar light may throw a less large shadow on the active surface of the PV panels mounted in the quadrilateral window of which the beam is the upper beam.

Horizontal and vertical, except when explained differently, always is to be understood in reference to the beam position when the beam is mounted between two vertical posts in the way it is intended to be mounted.

As shown in figure 7a to 7c, the beam 600 is provided near one of its outer ends 631 with a radial recess 630. This recess 630 is used to couple this outer end 631 to the post 11 through which this beam is inserted via the aperture 31. The recess 630 receives the edge 32 of the aperture 31. This recess 630 or slit is perpendicular to the beam axis 603. The recess is a simple incision or slit in the beam 600 from the lower side of the beam 600 in installed position, upwards. The two sides of the recess 630 slide over the edge 32 of the aperture 31 in the post 11 and as such prevent sliding of the installed beam 600 in a direction along the direction of the beam axis 603. The part of the circumference of the aperture 31, adjacent the circumference section where the beam 600 is hung to the aperture 31, fits to the surface of the beam immediately adjacent the recess 630. As such the beam 600 will not shift in horizontal direction perpendicular to the beam axis 603. As is shown in figures 7a and 7b, the post 11 is a C+-profile, being a rolled steel profile, in which an aperture 31 is provided. Along the edge of the aperture 31, guiding wings 33 may be provided which are to contact the surface of the beam and support the beam 600 when hung in the aperture 31. The part of the beam 600 extending beyond the post 11 provides the projection 611 at the second side 11b of the post 11. The length of this projection, i.e. the distance from the recess to the outer end of the beam, is less than 500mm.

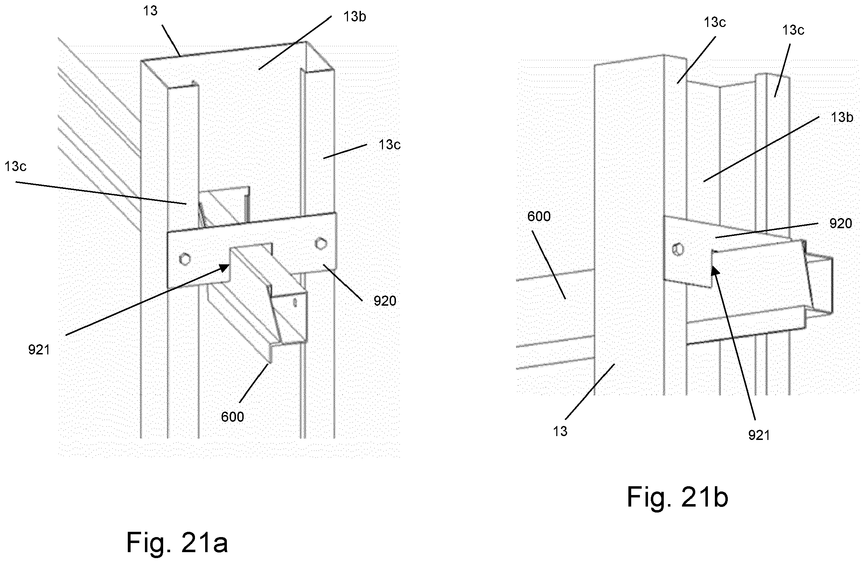

As the beam 600 is sunken to some extent in the aperture 31, due to this slit or recess 630, the beam 600 leaves a section of the aperture open in installed position. In order to avoid upwards shifting and/or movement of the beam 600 in the aperture 31, the open section of the aperture 31 may be closed by a plug. Alternatively, a holding means such as a bar or plate may be provided attached to the web of the post, the bar or plate contacting at least the upper point of the beam 600 and as such preventing upward movement. Closing this open aperture section may in particularly be done for the aperture positioned vertically as the highest position. As an alternative, shown in figures 21a and 21b, the upwards shifting and/or movement of the beam 600 may be prevented by a holding means 920, which is mounted on the lips 13c of the post 13. The holding means 920, may be a plate being provided with a recess 921 which fits to the perimeter of the beam 600 along the top and side part of the perimeter. This holding means may not only prevent upwards shifting and/or movement of the beam 600, but the sides of the recess 921 contacting the side of the beam 600 also prevents to a large extent occurrence of torsion of the post 13 round its axis, e.g. when wind load is acting upon the PV panels, hence upon the beams in the windows provided by the frame of which post 13 is part of. In this way the bending stiffness of the beams is preventing possible torsion about its longitudinal axis of the post.

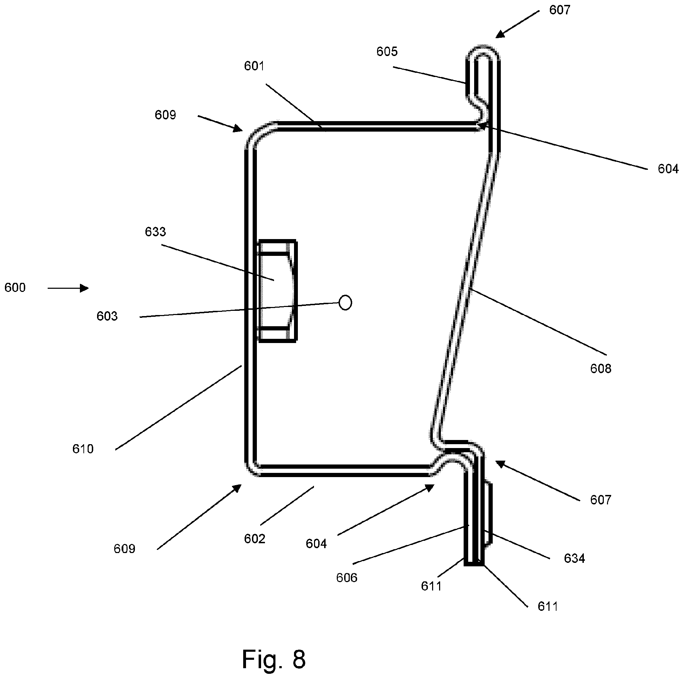

As visible in figure 7b, the outer end 631 has a perforation 632. At the inner side of the beam 600, a nut 633 may be provided in front of this perforation or opening 632. This is shown in figure 8. This nut 633 is mechanically or chemically attached in front of the opening 632 and is provided to receive a bolt used to couple a second beam to this outer end 631 of the beam 600. The spots 634 where the two outer ends of the steel plate from which the profile is rolled are clinched, are also shown in figure 8.

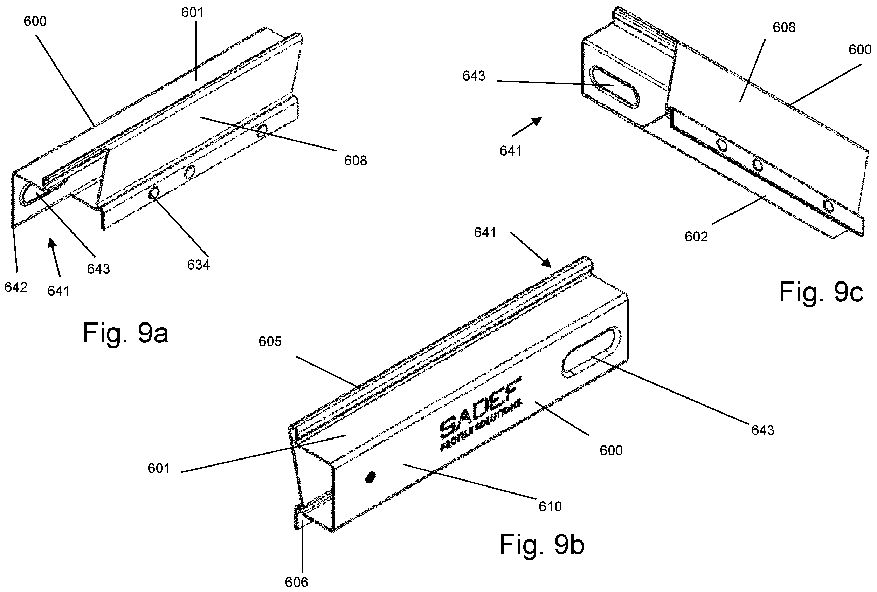

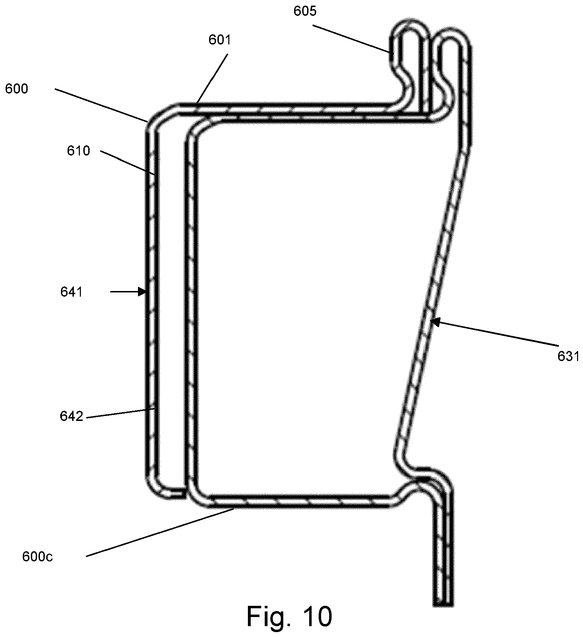

At the opposite outer end of the beam 600, the beam 600 has at this outer end a so-called cut-off, where part of the beams profile is cut away. This is shown in figures 9a to 9c. The remaining part of the profile, i.e. end cross section profile 642, fits to the outer side 631 of an identical beam profile, more specific, on the outer end of the beam 600 functioning as projection. So the second outer end 641 of the beam 600 can rest on the first outer end 631 of an identical beam. This end cross section profile 642 of this second outer end 641 comprises the surfaces 601, 605 and 610. As shown in figure 10, an end cross section profile 642 of a second outer end 641 of a first beam 600 is provided on a first outer end 631 of an adjacent beam 600c, which adjacent beam 600c provides a projection, hence serves to support the second outer end 641of a first beam 600. As best visible on figure 9a, the second outer end 641 comprises a slit-like opening 643. This slit opening will be positioned in front of the perforation or opening 632. The two outer ends of the two beams can be bolted together by inserting and screwing a bolt through this slit-like opening 643 of the outer beam 600c in order to couple to the nut 633 at the inner side of the first beam 600; Between bolt and beam, a washer to spread the forces may be provided.

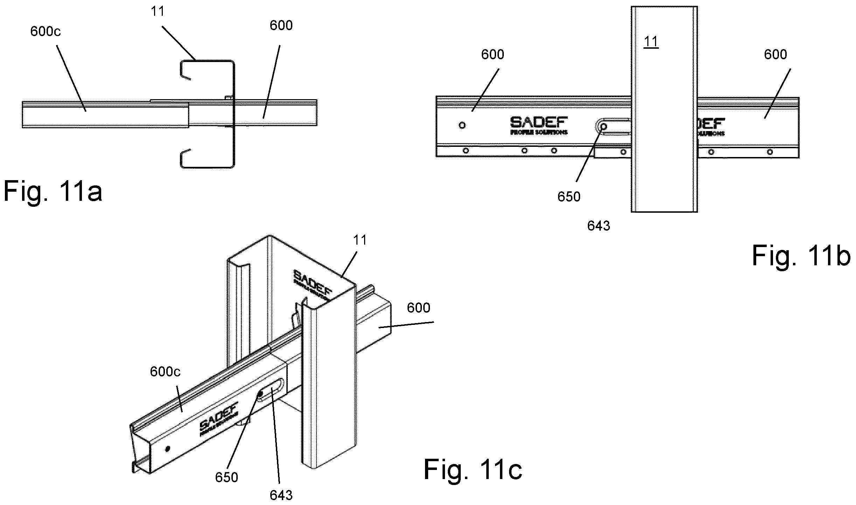

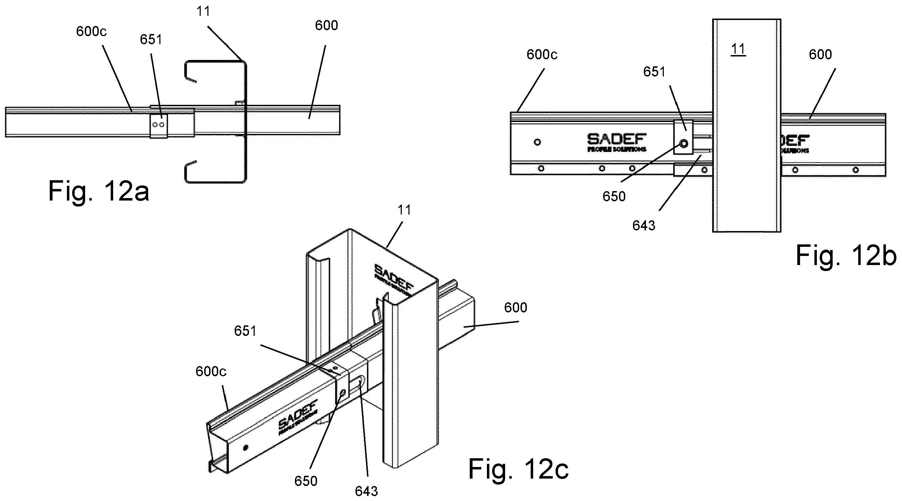

A top view (fig 11a), a side view (fig 11b) and a perspective view (fig 11c) are provided from two beams 600 and 600c, coupled to each other and to a post 11. In this constellation, the two beams 600 and 600c have their axes substantially parallel. The two beams 600 and 600c are bolted one to the other with bolt 650. An alternative embodiment is shown in top view (fig 12a), a side view (fig 12b) and a perspective view (fig 12c); In these figures, a view is provided from two beams 600 and 600c, coupled to each other and to a post 11. In this constellation, the two beams 600 and 600c have their axes substantially parallel. The two beams 600 and 600c are bolted one to the other with bolt 650, and between the bolt and the outer beam 600c, an angular plate 651 is provided. This angular plate 651 is also shown in figure 20c.

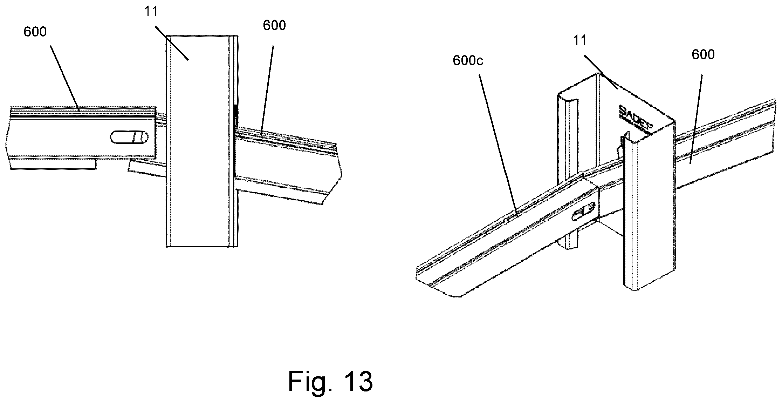

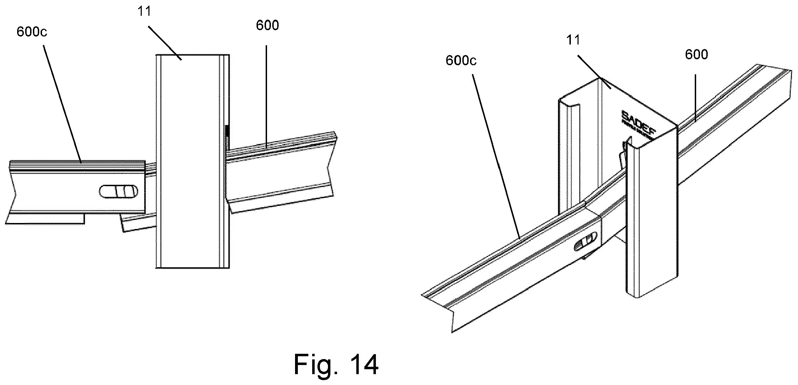

As an advantage for frames according to the invention, the beams may be coupled inclined one to the other, as shown in figures 3 and 4. Figure 13 shows two beams coupled, the firs beam 600 providing the projection, on which the second beam 600c is mounted. The first beam 600 is hung in an aperture of the post 11. The axes of the beams are under an angle of about -10°. Figure 14 shows two beams coupled, the firs beam 600 providing the projection, on which the second beam 600c is mounted. The first beam 600 is hung in an aperture of the post 11. The axes of the beams are under an angle of about 10°.

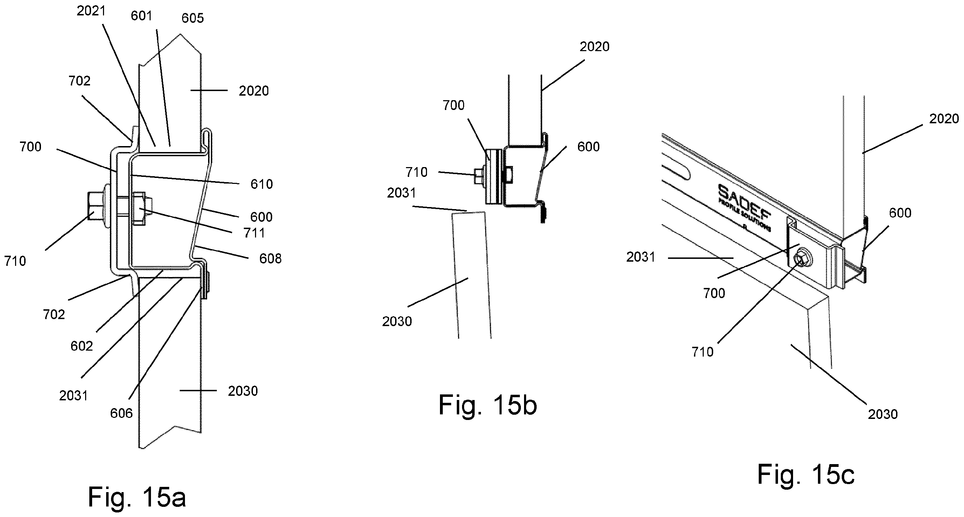

Turning to figure 15a to 15c, a beam 600 provided between two PV panels 2020 and 2030 is shown in cross section. To the beam 600, a clamp 700 is provided, which holds the upper and lower PV panel 2011 in place. The clamp 700 is bolted to the surface 610 of the beam 600 with bolt 710. The upper PV panel 2020 is resting with its lower edge 2021 on surface 601 of the beam 600. The lower PV panel 2030has its upper edge 2031 oriented towards the surface 602 of the beam, but between this surface 602 and the upper edge 2031, a space of some millimetres, e.g. up to 20mm, is provided. The clamp 700 has two lips 702, which lips touch and hold one surface of both PV panels 2020 and 2030. The height of the clamp 700 from one lip to the other lip is larger than the height of the surface 610 of the beam 600. The other, opposite surface of the PV panels are contacting the surfaces 605 and 606 of the beam. As such the PV panels are clamped in the frame.

During mounting of the PV panels, the clamp 700 is 90° rotated, the bolt not being completely closed. Because the width of the clamp 700 is less than the height of the surface 610 of the beam, the clamp will be completely extending in front of this surface 610 and will not hinder the mounting of the upper PV panel 2020 on the surface 601. The second, lower PV panel 2030 can be angled in the lower window of the frame, as is shown in figure 15b and 15c. Once the lower PV panel is provided in the lower window of the frame, the clamp is turned 90°and the bolt is closed, thereby clamping both PV panels simultaneously. The nut 711 may be provided as a nut already welded to the inner side of the beam 600, an opening or aperture or perforation being provided in front of the nut.

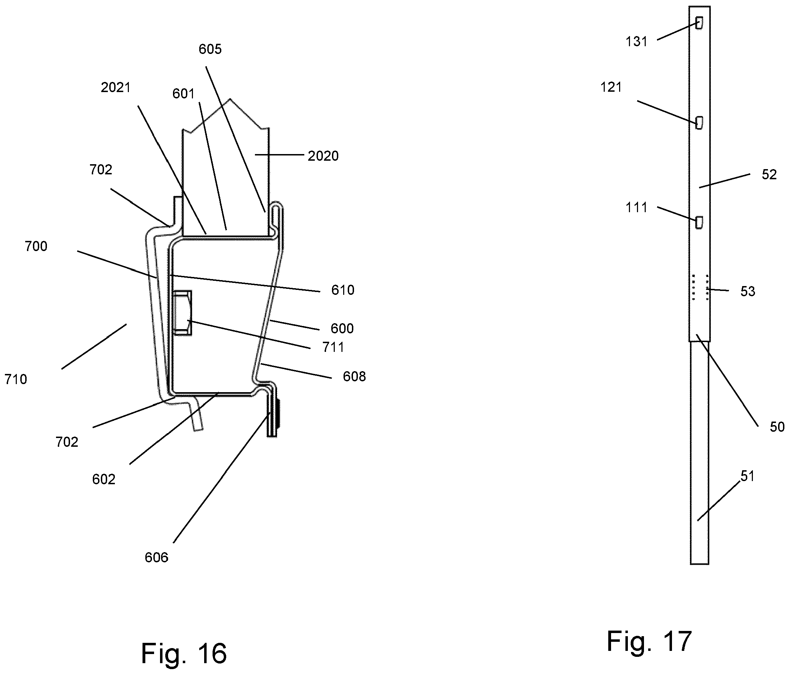

When only a PV panel or PV panels are mounted to the upper side 601 of the beam 600 post, as shown in figure 16, the clamp will incline but still will clamp the lower edge 2021 of the PV panel 2020. The same applies for a PV panel being mounted to the lower side 601 of the beam 600 only.

Typical PV panels have a width in the range of 120 to 300cm and a hight in the range of 80 to 140cm. The length of the beams hence is sufficient to provide quadrilateral windows in which such PV panels fit, or in which two or more panels side-by -side in beam direction can be mounted.

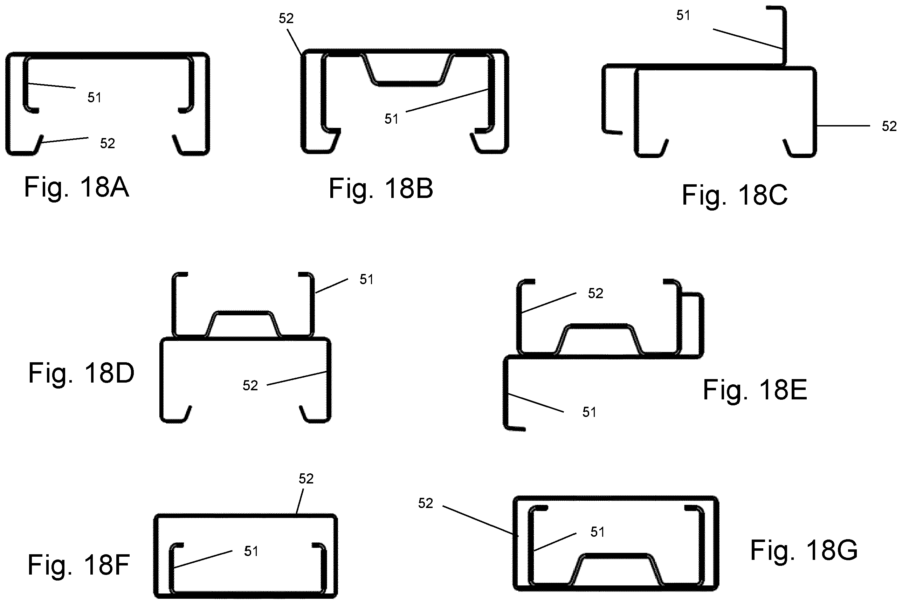

The posts 11 and 12 are in figure 17 and 18 referred to as post 50. A post 50 may comprise a first part 51 and a second part 52. The first part 51, also ram part or ram post, is partially inserted in the ground 20. The second part 52 is mechanically fixed, e.g. by bolts 53, to the portion of the first part 51 extending above the ground 20.

The first and second part may be identical or different in cross section and/or dimension. The two parts each may be a rolled steel profile. Several possible combinations are shown in figure 18.

In figure 18 A and 18B; the upper, second part 52 is slid over the lower, first part 51. In figure 18A, the lower, first part 51 is a C profile, the upper, second part 52 is provided from a C+ profile. In figure 18B, the first part 51 is a sigma profile. In figure 18C the first C+ profiled part 51 part is a Z+-profile. The web of the upper, C+ profiled part 52 is mechanically coupled to the web of the Z+-profile. In figure 18D the first part 51 is a sigma profiled part 51. The web of the upper, C+ profiled part 52 is mechanically coupled to the web of the sigma-profile. In figure 18E, the first part 51 is again a Z+-profile, the second part 52 being a sigma-profile. The webs of the two profiles are mechanically coupled one to the other. In figure 18F, a tubular upper part 52 is slid over a lower part 51 which is C-profiled. Similarly, in figure 18G a tubular upper part 52 is slid over a lower part 51 which is sigma profiled. It is understood that many more combinations can be made without departing from the invention. Typically the overlapping section of the upper and lower part of the post is in the range of 30 to 100cm, such as between 30 and 100cm, e.g. between 50 and 100 cm.

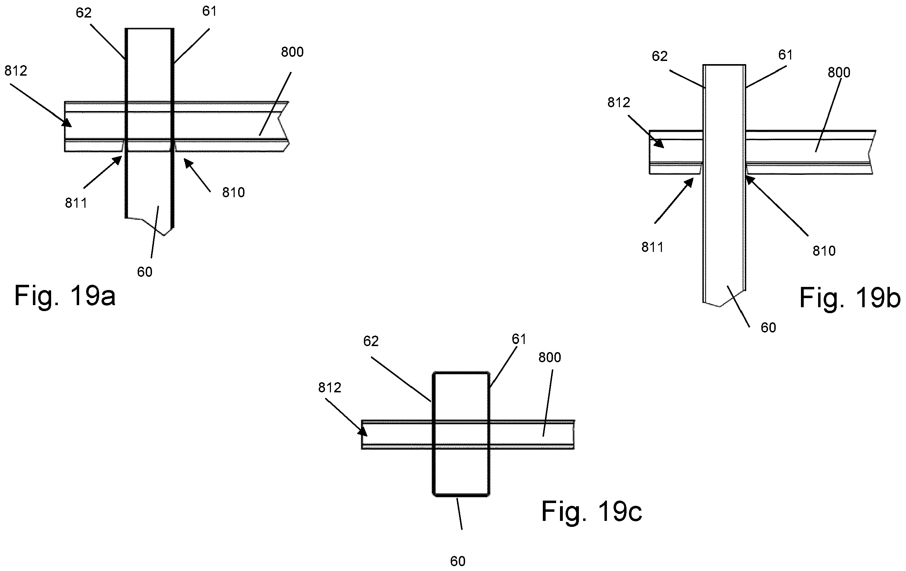

In case the post, optionally the upper part of the post, is has a tubular cross-sectional profile, the beams which are hung in apertures have two recesses, the recesses being on a distance one to the other being equal to the distance between the two opposite walls of the tubular profile. The tubular profile of the post has pairs of apertures, one in each side of the tube and being at equal position along the axis of the tubular profile. In figure 19, such tubular post 60 is shown. Figure 19a is a cross section according to a plane parallel to the vertical. Figure 19b is a front view, figure 19c is a top view. In two sides 61 and 62 of the tubular post, most preferably two identical apertures are provided. The beam 800 is inserted through both apertures. The beam 800 is provided with two recesses 810 and 811, each fitting on one edge of one of the apertures of the tubular post 60. The beam hence fits on the post and provides a projection 812. This projection can be used to provide a frame according to the invention.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A frame for a vertical solar system, the frame comprising:
- at least a first post (11) and a second post (12), each of said posts
∘ having a first and a second, mutually opposed, side (11a, 11b, 12a, 12b), wherein the second side (11b) of the first post (11) faces the first side (12a) of the second post (12), and
∘ comprising a first and a second aperture (111, 112, 121, 122) from the first to the second side through the post, wherein in vertical direction the first aperture is situated lower than the second aperture;
- a first pair of beams (200, 210), wherein:
∘ the first beam (200) of the first pair of beams extends through the first aperture (111) of the first post (11), thereby providing a first projection (201) at the second side (11b) of the first post (11), and
∘ the second beam (210) of the first pair of beams extends through the first aperture (121) of the second post (12);
- a second pair of beams (300, 310), wherein:
∘ the first beam (300) of the second pair of beams extends through the second aperture (112) of the first post (11), thereby providing a second projection (211) at the second side (11b) of the first post (11), and
∘ the second beam (310) of the second pair of beams extends through the second aperture (122) of the second post (12);
wherein at the second side (11b) of the first post (11):
∘ the second beam (210) of the first pair of beams is supported by the first projection (201), and
∘ the second beam (310) of the second pair of beams is supported by the second projection (211).

2. A frame according to claim 1, wherein said frame further comprises a third pair of beams (400, 410),
∘ the first post (11) and the second post (12) each comprising a third aperture (113, 123) from the first to the second side through the post, wherein in vertical direction the second aperture is situated lower than the third aperture;
wherein further:
∘ the first beam (400) of the third pair of beams extends through the third aperture (113) of the first post (11), and provides a third projection (221) at the second side (11b) of the first post (11), and
∘ the second beam (410) of the third pair of beams extends through the third aperture (123) of the second post (12);
and wherein at the second side (11b) of the first post (11), the second beam (410) of the third pair of beams is supported by the third projection (221).

3. A frame according to claim 2, wherein said frame further comprises a fourth pair of beams (500, 510),
∘ the first post (11) and the second post (12) each comprising a fourth aperture (114, 124) from the first to the second side through the post, wherein in vertical direction the fourth aperture (114, 124) is situated between the second aperture (112, 122) and third aperture (113, 123);
wherein further:
∘ the first beam (500) of the fourth pair of beams extends through the fourth aperture (114) of the first post (11), and provides a fourth projection (231) at the second side (11b) of the first post (11), and
∘ the second beam (510) of the fourth pair of beams extends through the fourth aperture (124) of the second post (12);
and wherein at the second side (11b) of the first post (11), the second beam (510) of the fourth pair of beams is supported by the fourth projection (231).

4. A frame according to any one of the claims 1 to 3, wherein said posts are substantially vertical to the ground.

5. A frame according to any one of the claims 1 to 4, wherein for each pair of beams, the axis of the second beam is under an angle in the range of -15° to 15° relative to the axis of the first beam.

6. A frame according to any one of the claims 1 to 5, wherein all beams are identical.

7. A frame according to any one of the claims 1 to 6, wherein in at least one quadrilateral window defined by said posts and two pairs of said beams, at least one PV panel is provided, the surfaces of the PV panel being substantially parallel to the plane defined by the posts and the two pairs of beams, the PV panel having one or two surface being provided with PV cells.

8. A frame according to any one of the claims 1 to 7, wherein, wherein said posts comprise at least a first and a second part, the first part being partially inserted in the ground, the second part being mechanically fixed to the portion of the first part extending above the ground.

9. A frame according to any one of the claims 1 to 8, wherein said beams have beam axes, the beams being provided with a radial recess for receiving the edge of the aperture in the recess.

10. A frame according to any one of the claims 1 to 9, wherein a beam has a beam cross section profile at a first of its outer ends, and the beam has an end cross section profile at the other outer end which matches with part of the beam cross section profile.

11. A frame according to claim 10, wherein the beam cross section profile, as installed in the frame, comprises an upper horizontal section, and the end cross section profile comprises at least part of said upper horizontal section.

12. A frame according to any one of the claims 10 to 11, wherein the beam cross section profile, as installed in the frame, comprises a side vertical section, and the end cross section profile comprises at least part of said side vertical section.

13. A vertical solar system plant, comprising a plurality of frames according to any one of the preceding claims, preferably said plant comprising a plurality of rows, each row comprising at least two frames.

14. A vertical solar system plant according to claim 13, said plant comprising at least 2 rows, preferably more than 2 rows, the outer rows comprising frames according to claim 3.

15. A vertical solar system plant according to any one of the claims 13 to 14, said vertical solar system plant is a bifacial vertical solar system plant.

## Patentansprüche

1. Rahmen für ein vertikales Solarsystem, wobei der Rahmen Folgendes umfasst:
- mindestens einen ersten Pfosten (11) und einen zweiten Pfosten (12), wobei jeder der Pfosten
o eine erste und eine zweite, einander gegenüberliegende Seite (11a, 11b, 12a, 12b) aufweist, wobei die zweite Seite (11b) des ersten Pfostens (11) der ersten Seite (12a) des zweiten Pfostens (12) zugewandt ist, und
o eine erste und eine zweite Öffnung (111, 112, 121, 122) von der ersten zu der zweiten Seite durch den Pfosten umfasst, wobei in vertikaler Richtung die erste Öffnung tiefer als die zweite Öffnung gelegen ist;
- ein erstes Balkenpaar (200, 210), wobei:
o sich der erste Balken (200) des ersten Balkenpaars durch die erste Öffnung (111) des ersten Pfostens (11) erstreckt, wodurch ein erster Vorsprung (201) an der zweiten Seite (11b) des ersten Pfostens (11) bereitgestellt wird, und
o sich der zweite Balken (210) des ersten Balkenpaars durch die erste Öffnung (121) des zweiten Pfostens (12) erstreckt;
- ein zweites Balkenpaar (300, 310), wobei:
o sich der erste Balken (300) des zweiten Balkenpaars durch die zweite Öffnung (112) des ersten Pfostens (11) erstreckt, wodurch ein zweiter Vorsprung (211) an der zweiten Seite (11b) des ersten Pfostens (11) bereitgestellt wird, und
o sich der zweite Balken (310) des zweiten Balkenpaars durch die zweite Öffnung (122) des zweiten Pfostens (12) erstreckt;
wobei an der zweiten Seite (11b) des ersten Pfostens (11):
o der zweite Balken (210) des ersten Balkenpaars durch den ersten Vorsprung (201) gestützt wird und
o der zweite Balken (310) des zweiten Balkenpaars durch den zweiten Vorsprung (211) gestützt wird.

2. Rahmen nach Anspruch 1, wobei der Rahmen ferner ein drittes Balkenpaar (400, 410) umfasst,
o wobei der erste Pfosten (11) und der zweite Pfosten (12) jeweils eine dritte Öffnung (113, 123) von der ersten zu der zweiten Seite durch den Pfosten umfassen, wobei in vertikaler Richtung die zweite Öffnung tiefer als die dritte Öffnung gelegen ist;
wobei ferner:
o sich der erste Balken (400) des dritten Balkenpaars durch die dritte Öffnung (113) des ersten Pfostens (11) erstreckt und einen dritten Vorsprung (221) an der zweiten Seite (11b) des ersten Pfostens (11) bereitstellt und
o sich der zweite Balken (410) des dritten Balkenpaars durch die dritte Öffnung (123) des zweiten Pfostens (12) erstreckt;
und wobei an der zweiten Seite (11b) des ersten Pfostens (11) der zweite Balken (410) des dritten Balkenpaars durch den dritten Vorsprung (221) gestützt wird.

3. Rahmen nach Anspruch 2, wobei der Rahmen ferner ein viertes Balkenpaar (500, 510) umfasst,
o wobei der erste Pfosten (11) und der zweite Pfosten (12) jeweils eine vierte Öffnung (114, 124) von der ersten zu der zweiten Seite durch den Pfosten umfassen, wobei in vertikaler Richtung die vierte Öffnung (114, 124) zwischen der zweiten Öffnung (112, 122) und dritten Öffnung (113, 123) gelegen ist;
wobei ferner:
o sich der erste Balken (500) des vierten Balkenpaars durch die vierte Öffnung (114) des ersten Pfostens (11) erstreckt und einen vierten Vorsprung (231) an der zweiten Seite (11b) des ersten Pfostens (11) bereitstellt und
o sich der zweite Balken (510) des vierten Balkenpaars durch die vierte Öffnung (124) des zweiten Pfostens (12) erstreckt;
und wobei an der zweiten Seite (11b) des ersten Pfostens (11) der zweite Balken (510) des vierten Balkenpaars durch den vierten Vorsprung (231) gestützt wird.

4. Rahmen nach einem der Ansprüche 1 bis 3, wobei die Pfosten im Wesentlichen vertikal zu dem Boden sind.

5. Rahmen nach einem der Ansprüche 1 bis 4, wobei für jedes Balkenpaar die Achse des zweiten Balkens unter einem Winkel im Bereich von -15° bis 15° bezogen auf die Achse des ersten Balkens ist.

6. Rahmen nach einem der Ansprüche 1 bis 5, wobei alle Balken identisch sind.

7. Rahmen nach einem der Ansprüche 1 bis 6, wobei in mindestens einem vierseitigen Fenster, das durch die Pfosten und zwei Paare der Balken definiert ist, mindestens ein PV-Modul bereitgestellt ist, wobei die Oberflächen des PV-Moduls im Wesentlichen parallel zu der Ebene sind, die durch die Pfosten und die zwei Balkenpaare definiert ist, wobei das PV-Modul ein oder zwei Oberflächen aufweist, die mit PV-Zellen bereitgestellt sind.

8. Rahmen nach einem der Ansprüche 1 bis 7, wobei die Pfosten mindestens einen ersten und einen zweiten Teil umfassen, wobei der erste Teil teilweise in den Boden eingesetzt ist und der zweite Teil mechanisch an dem Abschnitt des ersten Teils befestigt ist, der sich über den Boden erstreckt.

9. Rahmen nach einem der Ansprüche 1 bis 8, wobei die Balken Balkenachsen aufweisen, wobei die Balken mit einer radialen Aussparung zum Aufnehmen der Kante der Öffnung in der Aussparung bereitgestellt sind.

10. Rahmen nach einem der Ansprüche 1 bis 9, wobei ein Balken ein Balkenquerschnittsprofil an einem Ersten seiner äußeren Enden aufweist und der Balken ein Endquerschnittsprofil an dem anderen äußeren Ende aufweist, das mit einem Teil des Balkenquerschnittsprofils übereinstimmt.

11. Rahmen nach Anspruch 10, wobei das Balkenquerschnittsprofil, wenn es in dem Rahmen installiert ist, einen oberen horizontalen Teilbereich umfasst und das Endquerschnittsprofil mindestens einen Teil des oberen horizontalen Teilbereichs umfasst.

12. Rahmen nach einem der Ansprüche 10 bis 11, wobei das Balkenquerschnittsprofil, wenn es in dem Rahmen installiert ist, einen seitlichen vertikalen Teilbereich umfasst und das Endquerschnittsprofil mindestens einen Teil des seitlichen vertikalen Teilbereichs umfasst.

13. Vertikale Solarsystemanlage, umfassend eine Vielzahl von Rahmen nach einem der vorangehenden Ansprüche, wobei die Anlage vorzugsweise eine Vielzahl von Reihen umfasst, wobei jede Reihe mindestens zwei Rahmen umfasst.

14. Vertikale Solarsystemanlage nach Anspruch 13, wobei die Anlage mindestens 2 Reihen, vorzugsweise mehr als 2 Reihen, umfasst, wobei die äußeren Reihen Rahmen nach Anspruch 3 umfassen.

15. Vertikale Solarsystemanlage nach einem der Ansprüche 13 bis 14, wobei die vertikale Solarsystemanlage eine bifaziale vertikale Solarsystemanlage ist.

## Revendications

1. Cadre pour un système solaire vertical, le cadre comprenant :
- au moins un premier poteau (11) et un second poteau (12), chacun desdits poteaux
∘ possédant un premier et un second côté mutuellement opposés (11a, 11b, 12a, 12b), ledit second côté (11b) du premier poteau (11) faisant face au premier côté (12a) du second montant (12), et
∘ comprenant une première et une deuxième ouverture (111, 112, 121, 122) allant du premier au second côté à travers le poteau, dans la direction verticale ladite première ouverture étant située plus bas que la deuxième ouverture ;
- une première paire de poutres (200, 210),
∘ ladite première poutre (200) de la première paire de poutres s'étendant à travers la première ouverture (111) du premier poteau (11), fournissant ainsi une première saillie (201) sur le second côté (11b) du premier poteau (11), et
∘ ladite seconde poutre (210) de la première paire de poutres s'étendant à travers la première ouverture (121) du second poteau (12) ;
- une deuxième paire de poutres (300, 310),
∘ ladite première poutre (300) de la deuxième paire de poutres s'étendant à travers la deuxième ouverture (112) du premier poteau (11), fournissant ainsi une deuxième saillie (211) sur le second côté (11b) du premier poteau (11), et
∘ ladite seconde poutre (310) de la deuxième paire de poutres s'étendant à travers la deuxième ouverture (122) du second poteau (12) ;
sur le second côté (11b) du premier poteau (11) :
∘ ladite seconde poutre (210) de la première paire de poutres étant supportée par la première saillie (201), et
∘ ladite seconde poutre (310) de la deuxième paire de poutres étant supportée par la deuxième saillie (211).

2. Cadre selon la revendication 1, ledit cadre comprenant en outre une troisième paire de poutres (400, 410),
∘ ledit premier poteau (11) et ledit second poteau (12) comprenant chacun une troisième ouverture (113, 123) allant du premier au second côté à travers le poteau, dans la direction verticale ladite deuxième ouverture étant située plus bas que la troisième ouverture ;
en outre :
∘ ladite première poutre (400) de la troisième paire de poutres s'étendant à travers la troisième ouverture (113) du premier poteau (11), et fournissant une troisième saillie (221) sur le second côté (11b) du premier poteau (11), et
∘ ladite seconde poutre (410) de la troisième paire de poutres s'étendant à travers la troisième ouverture (123) du second poteau (12) ;
et sur le second côté (11b) du premier poteau (11), ladite seconde poutre (410) de la troisième paire de poutres étant supportée par la troisième saillie (221).

3. Cadre selon la revendication 2, ledit cadre comprenant en outre une quatrième paire de poutres (500, 510),
∘ le premier poteau (11) et le second poteau (12) comprenant chacun une quatrième ouverture (114, 124) allant du premier au second côté à travers le poteau, dans la direction verticale ladite quatrième ouverture (114, 124) étant située entre la deuxième ouverture (112, 122) et la troisième ouverture (113, 123) ;
en outre :
∘ ladite première poutre (500) de la quatrième paire de poutres s'étendant à travers la quatrième ouverture (114) du premier poteau (11), et fournissant une quatrième saillie (231) sur le second côté (11b) du premier poteau (11), et
∘ ladite seconde poutre (510) de la quatrième paire de poutres s'étendant à travers la quatrième ouverture (124) du second poteau (12) ;
et sur le second côté (11b) du premier montant (11), la seconde poutre (510) de la quatrième paire de poutres étant supportée par la quatrième saillie (231).

4. Cadre selon l'une quelconque des revendications 1 à 3, lesdits poteaux étant sensiblement verticaux par rapport au sol.

5. Cadre selon l'une quelconque des revendications 1 à 4, pour chaque paire de poutres, ledit axe de la seconde poutre faisant un angle compris dans la plage de -15° à 15° par rapport à l'axe de la première poutre.

6. Cadre selon l'une quelconque des revendications 1 à 5, toutes les poutres étant identiques.

7. Cadre selon l'une quelconque des revendications 1 à 6, dans au moins une fenêtre quadrilatérale définie par lesdits poteaux et deux paires desdites poutres, au moins un panneau PV étant prévu, les surfaces du panneau PV étant sensiblement parallèles au plan défini par les poteaux et les deux paires de poutres, le panneau PV possédant une ou deux surfaces dotées de cellules PV.

8. Cadre selon l'une quelconque des revendications 1 à 7, lesdits montants comprenant au moins une première et une seconde partie, la première partie étant partiellement enfoncée dans le sol, la seconde partie étant fixée mécaniquement à la partie de la première partie s'étendant au-dessus du sol.

9. Cadre selon l'une quelconque des revendications 1 à 8, lesdites poutres possédant des axes de poutre, les poutres étant dotées d'un évidement radial destiné à recevoir le bord de l'ouverture dans l'évidement.

10. Cadre selon l'une quelconque des revendications 1 à 9, une poutre présentant un profil de section transversale de poutre au niveau d'une première de ses extrémités externes, et ladite poutre présentant un profil de section transversale d'extrémité au niveau de l'autre extrémité externe qui correspond à une partie du profil de section transversale de poutre.

11. Cadre selon la revendication 10, ledit profil de section transversale de poutre, tel qu'installé dans le cadre, comprenant une section horizontale supérieure, et ledit profil de section transversale d'extrémité comprenant au moins une partie de ladite section horizontale supérieure.

12. Cadre selon l'une quelconque des revendications 10 à 11, ledit profil de section transversale de poutre, tel qu'installé dans le cadre, comprenant une section verticale latérale, et ledit profil de section transversale d'extrémité comprenant au moins une partie de ladite section verticale latérale.

13. Installation de système solaire vertical, comprenant une pluralité de cadres selon l'une quelconque des revendications précédentes, de préférence ladite installation comprenant une pluralité de rangées, chaque rangée comprenant au moins deux cadres.

14. Installation de système solaire vertical selon la revendication 13, ladite installation comprenant au moins 2 rangées, de préférence plus de 2 rangées, les rangées externes comprenant des cadres selon la revendication 3.

15. Installation de système solaire vertical selon l'une quelconque des revendications 13 à 14, ladite installation de système solaire vertical étant une installation de système solaire vertical biface.
